# EUROPEAN PATENT APPLICATION

(11) **EP 2 919 373 A1**
(43) Date of publication of application: **16.09.2015**
(21) Application number: 14159108.1
(22) Date of filing: 12.03.2014
(51) Int. Cl.: H02M 3/156, H02M 1/00

(54) **A method for switching a switched mode power supply, and apparatus for using such a method**

(71) Applicant: NXP B.V., 5656 AG Eindhoven (NL)
(72) Inventor: Smeets, Patrick, Redhill, Surrey RH1 1SH (GB); Halberstadt, Hans, Redhill, Surrey RH1 1SH (GB)
(74) Representative: Hardingham, Christopher Mark

(57) **Abstract**

A controller for a switched mode power supply operable in a high power mode and a low power discontinuous conduction mode and having a switch and a switching frequency, is disclosed the controller comprising a random element generator unit and being configured to, in the low power mode, use the output of the random element generator unit as a control to control the switch to operate the switched mode power supply with a random switching frequency. A method of operating such a controller is also disclosed, as is equipment having such a controller.

## Description

### Field

This disclosure relates to switched mode power supplies (SMPS) and to methods of operating the same, and in particular to SPMS operating in relatively low power or with partial loads.

### Background

Modern-day switched mode power supplies typically operate at relatively high frequencies, in normal power operation. Many different topologies and types of switched mode power supplies are known, but they generally have in common a switch or switches, which typically switch a primary or input circuit. Herein, the term switched mode power supply will be considered synonymous with switched mode power converter. Typically, the SMPS includes a reactive element - either capacitive or inductive, the current through which or the voltage across which is affected by the switching of a primary-side circuit. The switching frequency of the SMPS refers to the frequency at which the state of the switch (or switches) is cycled - for instance from open to closed and back to open. Such frequencies are typically in the MHz range, and can be 10s or even 100s of MHz.

In the example of a flyback converter with an inductor as the reactive component, a current builds up in the inductor while the switch is closed. In the case of peak-current control the switch is opened when the current in the inductor reaches a predetermined peak. Or, in the case of on-time control, the switch is opened after a certain predetermined time.

Power efficiency of power converters is becoming more and more important. Power efficiency is a function of the ratio between transferred output energy and lost energy per cycle. In the past efficiency optimisation was mainly considered for nominally loaded converters. In recent years power efficiency at lower loads, so called part load efficiency, has become equally important.

At lower loads, without special precautions, efficiency will drop. The energy lost per switching cycle (switching loss) of any of the power semiconductors in the converter becomes significant with respect to the transferred energy to the output. A commonly applied technique at low load is to reduce the number of switching cycles, or converter switching frequency, and increase the amount of energy transferred to the load per cycle. This approach effectively increases efficiency at low load. Considering orders of magnitude, at low load, the switching frequency may be reduced, from > 10⁶ Hz (MHz range), into the 10⁵ (100s of kHz), or even 10⁴ (10s of KHz) or 10³ (kHz) range.

However, there is a limit to reducing the switching frequency. When the frequency enters the audio spectrum, audible noise from mechanical transformer excitation might result. This is generally undesired, and it is known to avoid this effect by so-called burst mode kind of operation. In this mode of operation, the converter is active during a certain burst period and then turned off for some time. During the burst period the converter switches and efficiently delivers more than average power to the load. During the off-period, no power is delivered to the load, so no switching loss occurs. The average delivered power to the output, which must equal the power consumed by the load, can be controlled by changing the ratio between burst and off-period commonly referred to as the burst duty-cycle. The intention of this operating mode is to avoid spectral content in the audio range. During the burst period the converter switches at a frequency above audio. The overall repetition frequency of bursts and off-period is chosen at the low side of the audio spectrum.

Burst mode generally results in a large output voltage ripple: during the burst period the output capacitor is charged, so the voltage rises. During the relatively long off time the output voltage drops. The output smoothing capacitor value thus has to be chosen such that the minimum and maximum output voltage meet the load requirements.

An auxiliary winding on the primary side of the transformer and coupled to the output voltage is commonly used in SMPS. The auxiliary winding is provided to supply power to the control IC which controls the converter. In burst mode a second but correlated ripple appears on this supply voltage. The voltage has to stay above a certain minimum in order to keep the control IC operating. This may pose another constraint on burst mode design, and in particular may require a larger control IC buffer capacitor.

### Summary

It is an object of the present disclosure to provide a method of operating a SMPS using random switching frequencies, and a SPMS adapted to operate according to the method.

According to a first aspect, there is provided a controller for a switched mode power supply operable in a high power mode and a low power discontinuous conduction mode and having a switch and a switching frequency, the controller comprising a random element generator unit and being configured to, in the low power mode, use the output of the random element generator unit as a control to control the switch to operate the switched mode power supply with a random switching frequency.

By the introduction of a random switching mode, the switching frequencies may extend into the audio range, without inducing undesirable resonances within the audio range. Furthermore, providing a random switching mode may be less complex than providing a control method such as on-time control, or peak-current control which generally result in a well-defined frequency, and then applying jitter to the control.

In one or more embodiments, the random element generator unit is a random current generator unit. In other embodiments, the random element generator unit is a random time generator unit. A random time generator is generally straight-forward to implement either digitally or in an analogue mode.

Embodiments further comprise a voltage detector for detecting an output voltage from the switched mode power supply, and are further configured to close the switch in response to the output voltage falling below a predetermined level. In case the predetermined level is fixed and constant, the interval between switching cycles then may depend directly on the period for which the switch is closed, the load current, and aspects of the design and in particular the size of the output capacitor. In other embodiments, the voltage detector may be replaced by a current detector configured to detect the current in the output circuit, and the controller is configured to close the switch in response to the output current falling below a predetermined level. Embodiments may extend to other output parameter detectors.

In embodiments, the controller may further comprised a conditioning circuit configured to place one of a lower bound and an upper bound on the random element. The conditioning circuit may be an envelope limiter configured to limit the random element to be between a maximum value and a minimum value.

In embodiments, the controller is further configured to control the switch in the high power mode to operate with a switching frequency which is greater than a human audible frequency range.

According to another aspect, there is provided a switched mode power supply comprising a controller as described above.

According to yet another aspect, there is provided an electronic equipment having a normal operation mode and a lower power operation mode, and comprising a switched mode power supply as described above and a load, the equipment being configured to operate the switched mode power supply in the high power mode during normal operation of the equipment, and to operate the switched mode power supply in the low power mode during the lower power operation mode.

The electronic equipment may be mains operable. The lower power operation mode may be a standby mode. In other embodiments, the lower power operation mode may be a so-called "no load" mode, in which the switched mode power supply may provide power sufficient only for its own controller.

According to another aspect, there is provided a method of controlling a low power mode operation of a switched mode power supply operable in a high power mode and a low power mode, the method comprising using a random element generator unit to generate a random element, and operating the switched mode power supply in the low power mode with a random switching frequency in dependence on the random element.

In embodiments, generating a random element comprises generating a one of a random current and a random time. Embodiments may further comprise detecting an output voltage from the switched mode power supply, and closing the switch in response to the output voltage falling below a predetermined level.

Embodiments further comprise conditioning the random element to place one of a lower bound and an upper bound on the random element. Conditioning the random element may further comprise limiting the random element to a value which is between a maximum value and a minimum value.

These and other aspects of the invention will be apparent from, and elucidated with reference to, the embodiments described hereinafter.

### Brief description of Drawings

Embodiments of the invention will be described, by way of example only, with reference to the drawings, in which
Figure 1 shows a basic circuit diagram of a flyback power converter;
Figure 2(a) shows the switch current, and Figure 2(b) shows the output voltage, for a flyback power converter operating in a normal mode;
Figure 3(a) shows the switch current, and Figure 3(b) shows the output voltage, for a flyback power converter operating in a burst mode;
Figure 4 shows the switch current frequency spectrum for the low power continuous switching operation according to Figures 2(a) and 2(b);
Figure 5 shows the switch current frequency spectrum for burst mode operation according to Figures 3(a) and 3(b);
Figure 6(a) shows Figure the switch current, and Figure 6(b) shows the output voltage, for a flyback power converter operating according to one or more embodiments;
Figure 7 shows the switch current frequency spectrum for operation according to embodiments;
Figure 8 shows a control circuit for a switch mode power supply, according to embodiments; and
Figures 9(a), 9(b) and 9(c) show flow diagrams for exemplary switching methods according to one or more embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

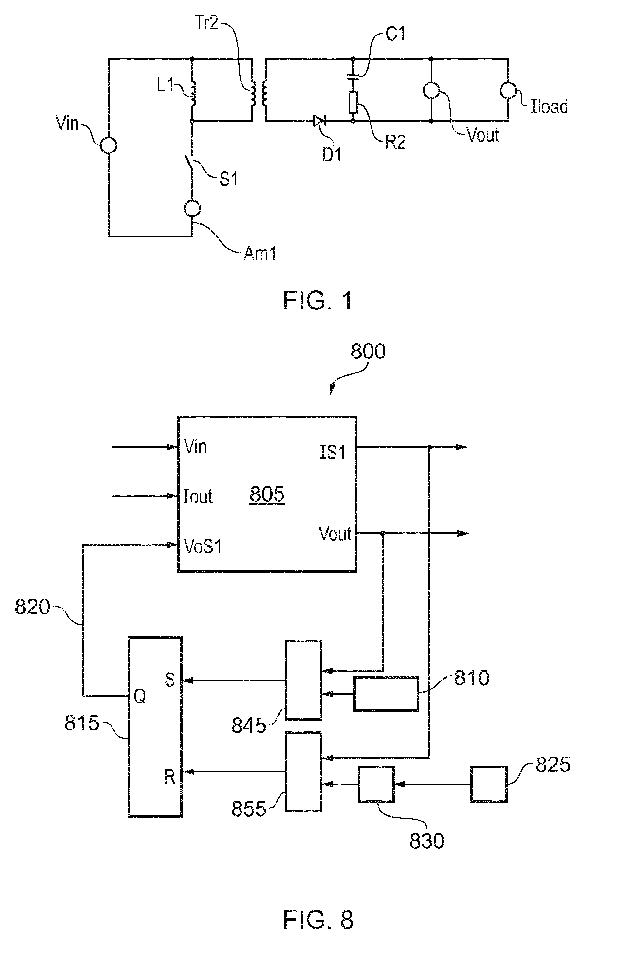

Figure 1 shows a basic circuit diagram of an example flyback power converter. The converter has an input which, in use, is connected to an input voltage of Vin. Connected across the input in series are a switch S1 and a magnetising inductance L1. As shown, the converter may include a current meter such as an ammeter Am1 in series with the switch and inductance. Even though, in Figure 1, Tr2 is shown separately, in some example, the magnetising inductance L1 is a primary winding of a transformer Tr2. Transformer Tr2 includes a secondary winding connected to the remainder of the output circuit. The output circuit includes an output capacitor C1, associated with which will generally be a parasitic resistance, shown in Figure 1 as R2. The output capacitor is connected in series with an output diode D2. The output circuit may drive a load, by providing an output voltage Vout, and/or an output current Iload. Operation of such a flyback circuit, by means of a control circuit (not shown) which controls the timing of the switching of switch S1, will be familiar to the skilled person.

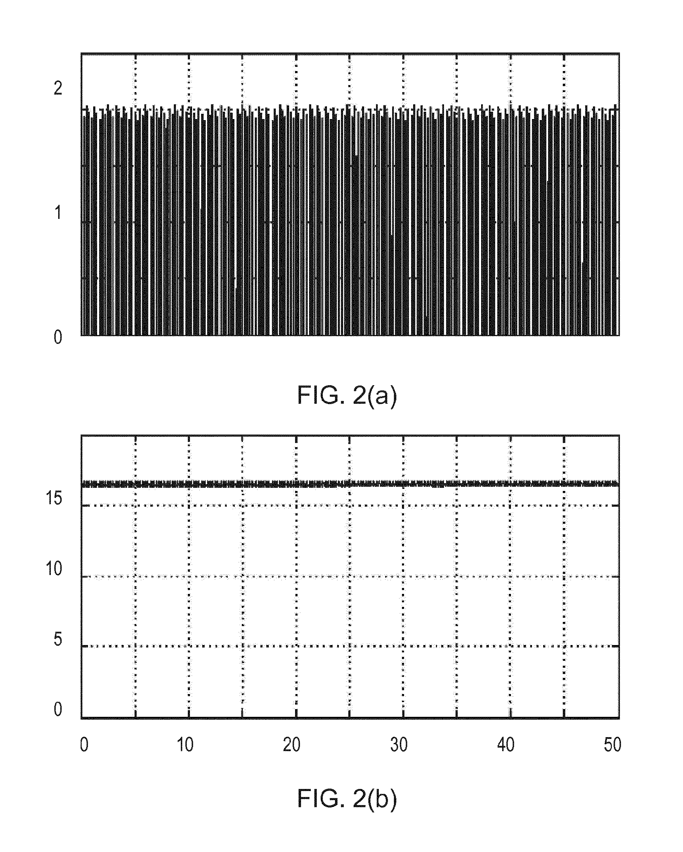

In a continuous switching mode, the switch current may have a waveform as shown in Figure 2(a). Figure 2(a) shows switching current in amps on the ordinate or y-axis against time in milliseconds on the abscissa or x-axis. The Figure shows that the switching current varies between 0 and 2A. Figure 2(b) shows the corresponding output voltage measured in volts, on the y-axis or ordinate, in such continuous switching mode operation. As shown, the peak current in the switch, whilst it is closed, is 2A, resulting in an average output current of 0.5A, based on a 50% mark-space ratio. The output voltage is shown as 16.5 V with relatively little ripple on the voltage. As can be seen from the Figure, in this example, operation in continuous switching mode at this power level results in a switching frequency of approximately 4 kHz, that is to say there are about 20 cycles every 5 ms. 4 kHz is well inside the audible range, and as a result there is likely to be a noticeable hum or other 4 kHz tone emitted by the SMPS. This is strongly undesirable, and as a result, continuous switching operation is not preferred at such a power level.

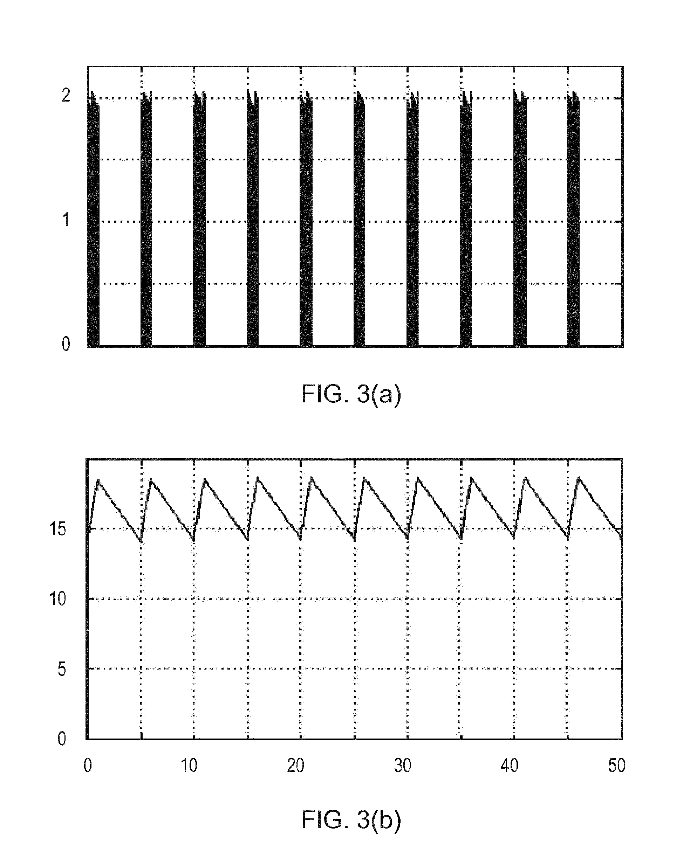

Figure 3(a) shows the switch current, for the same converter, operated at the same low power, but in burst mode. Figure 3(a) plots the switch current against time, and Figure 3(b) the output voltage, again over a 50 millisecond interval. As shown, the converter includes a switching burst every 5 ms (corresponding to a burst frequency of 200 Hz). Within the bursts, the switching frequency is higher than that shown in Figures 2(a) and 2(b), such that individual current waveforms cannot be distinguished. In the experimental setup shown, the switching frequency was 20 kHz. Once again a peak current of 2 A corresponds to an average output current, during the bursts, of 0.5A. Although the output voltage is, as shown, still 16.4 V, in this case there is a large ripple on this value: the output voltage can reach as high as 18.5 volts and as low as 14 V.

During the burst period the converter switches and efficiently delivers more than average power to the load. During the off-period, no power is delivered to the load, so no switching loss occurs. The average delivered power to the output, which must equal the power consumed by the load, can be controlled by changing the ratio between burst and off-period commonly referred to as the burst duty-cycle. Such a burst mode may be used to avoid audio frequency noise: during the burst period the converter switches at a frequency above audio. The overall repetition frequency of bursts and off-period is chosen at the low side of the audio spectrum.

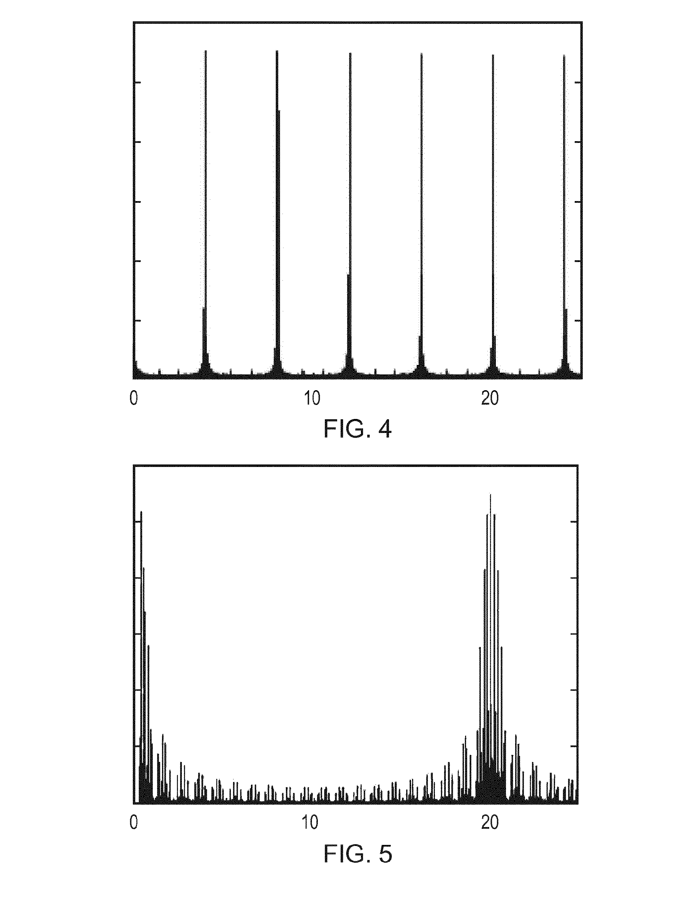

Figure 4 and 5 show the switch current frequency spectra of operation according to normal mode in Figures 2(a) and 2(b) and burst mode in Figures 3(a) and 3(b) respectively. The frequency spectrum magnitude, in arbitrary units, is plotted on the ordinate or y-axis against frequency in kHz on the abscissa or x-axis. The spectrum in Figure 4 shows the basic switching frequency of 4 kHz, together with harmonics thereof. There are no subharmonics, as is clear from Figure 4. The structure of the frequency spectrum in burst mode is more complicated. The main frequency response is at 20 kHz which is the switching frequency within a burst. The next largest peak is at the low frequency of 200 Hz, corresponding to the burst interval. The remaining, much lower level, structure shown in the spectrum is due to the higher harmonics of the 200Hz, with sidebands due to mixing.

In contrast to using burst mode at low load operation, according to one or more embodiments a random switching frequency is applied. Instead of switching in bursts, each burst having a well-defined or constant switching frequency within the burst, separated by a well-defined or constant time, according to embodiments the switching frequency is no longer either well-defined or constant. It will be appreciated that, as used herein, the term "well-defined" includes a constant or a base value, to which random or periodic jitter may be applied.

By applying a random switching mode, the requirement for burst switching may be entirely removed according to embodiments. One or both of the large output voltage ripple generally associated with burst mode, and the requirement for a large smoothing capacitor on the output side of the converter, may therefore be ameliorated. Further, any capacitor supplying the control IC from the converter may also be smaller.

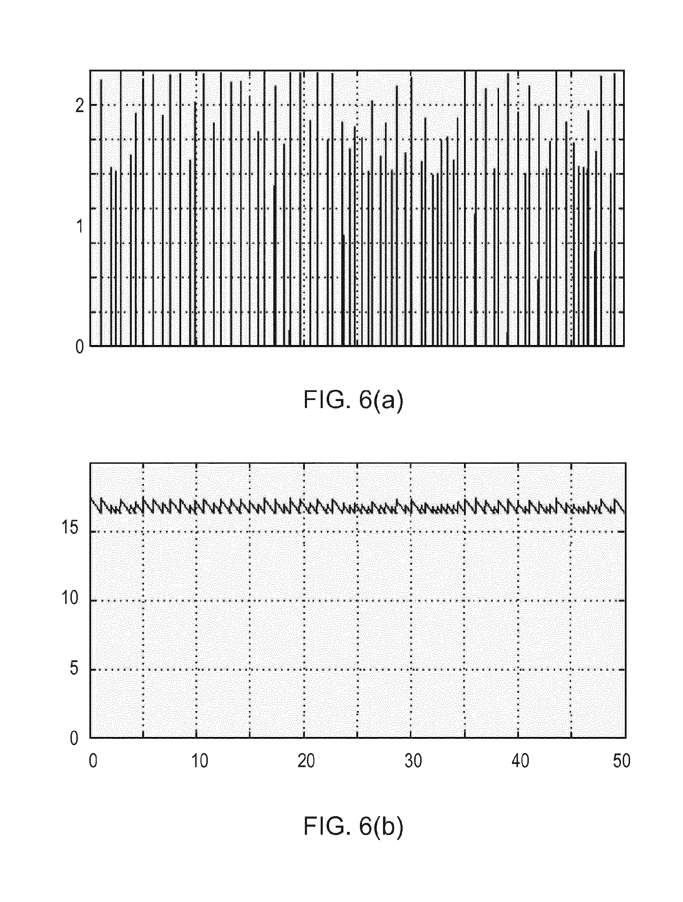

An example switching current and output voltage, for a converter operating according to embodiments, is shown in Figures 6(a) and 6(b) respectively. Note that in this case there is no well-defined "average" peak current for the switch during its closed time. Rather, the peak current for each switch cycle is determined, either directly or indirectly, by a random element generator, as will be as described in more detail herein below. Further, due to the randomness in the time in which the switch is closed in each cycle, the interval between individual switching cycles is also random, as can be seen in Figures 6(a) and 6(b). In one example, an average output voltage of 16.7 V is achieved, and as shown, the ripple on this voltage, at approximately 1 V peak-to-peak, is significantly less than is observed for the burst mode switching. As the skilled person would [RM1]appreciate, the ripple is highest in the longest gaps between switching cycles. A trade-off between output voltage ripple and output capacitor value may be made according to application configurations in specific embodiments.

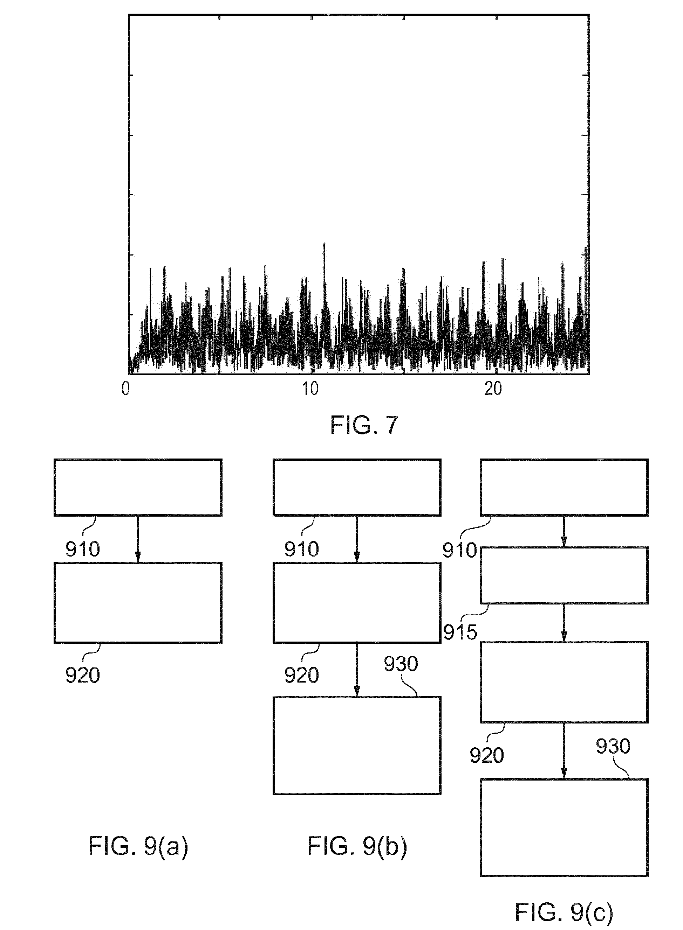

An example, corresponding to the operation shown in Figures 6(a) and 6(b), of the switching frequency spectrum magnitude according to embodiments is shown in Figure 7, in arbitrary units plotted against the frequency in kHz. As shown, no individual harmonic peaks are present in the audio spectrum. Although there does appear to be some structure of the spectrum, this is merely an artefact of the non-ideality of the randomness. Although the range of switching frequencies extends into the audio spectrum, due to the randomness, audible mechanical excitation of the transformer is not heard.

Figure 8 shows, in block form, a control circuit 800 for providing the random switching frequency control of a flyback converter 805 according to embodiments. A power load sensing network (not shown) detects the requirement for a random switching mode. This typically may correspond to an occurrence in which the converter is operating in normal control mode, but the required output power results in a reduction in frequency which would result in operation within the audio frequency range.

A minimum output voltage detection circuit 810 and 845 as shown sets the Q output 820 of a S-R flip-flop 815. This detection circuit comprises a reference minimum voltage (Voutmin) source 810, which is compared with the converter output voltage Vout in comparator 845. The comparator output provides the set input S to the S-R flip-flop 815. The Q output turns on the switch S1 of the flyback converter, and energy is stored in the transformer magnetising inductance L1. A randomiser circuit comprises a random element generator unit 825 and controls the moment at which the S-R flip-flop 815 is reset, thereby turning off switch S1. In the embodiment shown in Figure 8, the random element generator unit is a random current generator unit which outputs a random current level. The randomness occurs cycle-by-cycle, such that the random current generator provides a different value for the random current each cycle. This may be achieved, without limitation, for instance by a fluctuating random current generator which continually changes its output even within a cycle, or by a set-and-hold arrangement in which a value for the random current is determined, and that value is held for the remainder of that particular switching cycle. The random current is compared with the switch current IS1, that is to say, the current through the converter switch, in a comparator 855. Once the converter current reaches or exceeds the random current, the comparator enables the reset input R of S-R flip-flop. Thus the randomiser circuit determines the amount of energy which is stored in the inductance L1. This amount of energy, in combination with the selected output capacitor and the load current, determines the actual switching frequency and output voltage ripple, by means of the minimum output voltage detection circuit 810. That is to say, the switch S1 will not be turned on again until the detection circuit 810 detects that the output voltage has fallen below the predetermined minimum output voltage. The time interval until this minimum output voltage level is reached is determined by the size of the output capacitor C1 and the current drawn by the load.

In other embodiments, a minimum output voltage detection circuit 810 is not required; instead an average output voltage may be measured or detected and compared with a reference value in order to determine the timing of the start of the next switching cycle.

In the embodiments described above, the randomiser circuit 825 supplies a random current, and compares this with the switch current by means of comparator 855. The comparator output is set to high when the switch current exceeds the random current. The comparator output is connected to the reset input of the SR flip-flop 815. Such an embodiment therefore provides an analogy to peak current control, since the peak current is controlled - albeit randomly. In other embodiments, the random element generator unit generate a random time, and thus may have the effect of directly determining the on-time of the switch, such that the randomness control mode is analogous to an on-time control mode.

As shown, the output from the randomiser circuit 825 may be modified by a conditioning circuit or envelop limiter 830, which may force an upper bound, and/or a lower bound of the switching frequency (Fsw saturation). In other embodiments, such a conditioning circuit or envelop limiter 830 is not included.

The randomiser may be implemented using any one of a variety of algorithms or components. Non-limiting examples include stochastic randomisers and noise randomisers.

It will be appreciated that elements of the control circuit described above may be implemented using analogue components, a digital system, or a combination of both. Further, elements such as the randomiser may be implemented in hardware or software or combination thereof.

Figures 9(a), 9(b) and 9(c) show switching methods according to various embodiments. According to Figure 9(a), at a random element is generated (step 910), and the switch is opened in dependence on the random element (step 920). In other embodiments, such as shown in Figure 9(b), after step 920, the switch is closed in dependence on a minimum value of the output voltage (Vout) being reached or crossed (step 930). In yet other embodiments, as shown in Figure 9(c), between step 910 and 920, at step 915, the random element is conditioned (step 915).

As used herein, the audio frequency range may, for instance, be considered to be a range of 20 Hz to 20 kHz. However, the skilled person would appreciate that other limits may be applied for the audio frequency range, and these will depend on the specific embodiment or application. For instance, although humans generally are unresponsive to frequencies above 20 kHz, animals such as dogs may easily respond to higher frequencies. As a result, the frequency range to be considered as "audio" may be application-specific.

The skilled person will also appreciate that although embodiments have been described above in relation to flyback converters, embodiments need not be limited thereto but may extend to other converter configurations, such as without limitation forward converters, half-bridge converters, buck, boost, buck-boost, Sepic, Cuk, and the like.

From reading the present disclosure, other variations and modifications will be apparent to the skilled person. Such variations and modifications may involve equivalent and other features which are already known in the art of switched mode power supplies, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A controller for a switched mode power supply operable in a high power mode and a low power discontinuous conduction mode and having a switch and a switching frequency, the controller comprising a random element generator unit and being configured to, in the low power mode, use the output of the random element generator unit as a control to control the switch to operate the switched mode power supply with a random switching frequency.

2. A controller as claimed in claim 1, wherein the random element generator unit is a random current generator unit.

3. A controller as claimed in claim 1, wherein the random element generator unit is a random time generator unit.

4. A controller as claimed in any preceding claim, further comprising a voltage detector for detecting an output voltage from the switched mode power supply, and further configured to close the switch in response to the output voltage falling below a predetermined level.

5. A controller as claimed in any preceding claim, further comprising a conditioning circuit configured to place one of a lower bound and an upper bound on the random element.

6. A controller as claimed in claim 5, wherein the conditioning circuit is an envelope limiter configured to limit the random element to be between a maximum value and a minimum value.

7. A controller as claimed in any preceding claim, wherein the controller is further configured to control the switch in the high power mode to operate with a switching frequency which is greater than a human audible frequency range.

8. A switched mode power supply comprising a controller as claimed in any preceding claim.

9. An electronic equipment having a normal operation mode and a lower power operation mode, and comprising a switched mode power converter as claimed in claim 8 and a load, configured to operate the switched mode power supply in the high power mode during normal operation of the equipment, and to operate the switched mode power supply in the low power mode during the lower power operation mode.

10. An electronic equipment according to claim 9, wherein at least one of the electronic equipment is mains operable and the lower power operation mode is a standby mode.

11. A method of controlling a low power mode operation of a switched mode power supply operable in a high power mode and a low power mode, the method comprising using a random element generator unit to generate a random element, and operating the switched mode power supply in the low power mode with a random switching frequency in response to the random element.

12. The method of claim 11, wherein generating a random element comprises generating a one of a random current and a random time.

13. The method of claim 11 or 12 further comprising detecting an output voltage from the switched mode power supply, and closing the switch in response to the output voltage falling below a predetermined level.

14. The method of any claims 11 to 13 further comprising conditioning the random element to place one of a lower bound and an upper bound on the random element.

15. The method of claim 14 wherein conditioning the random element comprises limiting the random element to a value which is between a maximum value and a minimum value.
